# FASCICULE DE BREVET EUROPEEN

(11) **EP 1 996 413 B1**
(45) Date de publication et mention de la délivrance du brevet: **07.05.2014**
(21) Numéro de dépôt: 07726828.2
(22) Date de dépôt: 13.03.2007
(51) Int. Cl.: B60C 23/04

(54) **VEHICULE COMPORTANT AU MOINS UN ENSEMBLE MONTE ET UTILISATION D'UN SYSTEME DE MESURE**
FAHRZEUG, DAS MINDESTENS EINE MONTIERTE EINHEIT UMFASST, UND VERWENDUNG EINES MESSSYSTEMS
VEHICLE COMPRISING AT LEAST ONE ASSEMBLED ENTITY AND USE OF A MEASUREMENT SYSTEM

(30) Priorité: 14.03.2006 FR 0602338
(43) Date de publication de la demande: 03.12.2008
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: FAGOT-REVURAT, Lionel, F-03140 Barberier (FR)
(74) Mandataire: Le Cam, Stéphane Georges Elie
(86) Numéro de dépôt international: PCT/EP2007/052322
(87) Numéro de publication internationale: WO 2007/104751

(56) Documents cités:
- EP-A2- 1 026 490
- WO-A-93/25399
- DE-A1- 2 351 456
- US-A- 3 489 998
- US-A1- 2002 101 342
- US-A1- 2002 121 132

## Description

La présente invention concerne un véhicule et plus spécifiquement un véhicule comportant au moins un ensemble monté, comprenant une roue et un pneumatique, et un élément constitué pour partie de masses polymériques. L'invention concerne encore l'utilisation d'un système de mesure d'un paramètre physique du pneumatique sans fil, par technologie à onde acoustique de surface ou onde acoustique de volume, du type SAW (Surface Acoustic Wave) ou BAW (Bulk Acoustic Wave), dans un ensemble monté d'un véhicule.

L'invention se rapporte à tout type de véhicule, tel que automobile, motocyclette, poids-lourds, engin agricole ou de génie civil.

Bien que non limitée à une telle application, l'invention sera plus particulièrement décrite en référence à la mesure de température locale dans un pneumatique.

Les performances d'un pneumatique que sont notamment l'adhérence, l'endurance, la résistance à l'usure, le confort en roulage sont liées à différents éléments du pneumatique tels que le choix d'une architecture sommet, le choix et la nature des mélanges caoutchouteux constituant les différentes parties du pneumatique. Par exemple, la nature des mélanges caoutchouteux constituant la bande de roulement intervient sur les propriétés dudit pneumatique telles que les propriétés d'usure et d'adhérence.

Par ailleurs, il est également connu de l'homme du métier que les propriétés physico-chimiques des mélanges caoutchouteux varient avec l'usage qui est fait du pneumatique et notamment en fonction de la température, qui a, par exemple, une influence sur les propriétés de la bande de roulement d'un pneumatique. Ainsi, lors de l'utilisation d'un véhicule, les mélanges caoutchouteux formant les différentes parties du pneumatique telles que les zones basses, les flanc, la bande de roulement sont soumis à des sollicitations qui conduisent à une élévation de température des mélanges et donc à des variations des propriétés physico-chimiques desdits mélanges. Il est par exemple connu que selon le type de pneumatique et son usage, certaines zones du pneumatique sont soumises à des contraintes telles que les températures atteintes peuvent conduire à des performances d'adhérence ou d'usure du pneumatique qui ne sont pas optimales.

Il est ainsi souhaitable de pouvoir effectuer des mesures de température ou bien d'un autre paramètre physique du pneumatique et notamment des masses caoutchouteuses qui le constituent par exemple pour aider le conducteur ou pilote du véhicule à adapter sa conduite aux conditions et ainsi optimiser les performances du pneumatique.

Par exemple, un sous-gonflage d'un pneumatique, c'est-à-dire une pression du pneumatique inférieure à la pression nominale, d'un véhicule de tourisme peut conduire en roulage à un échauffement des épaules de celui-ci, c'est-à-dire des extrémités axialement extérieures de la bande de roulement.

Selon un autre exemple, un sur-gonflage d'un pneumatique, c'est-à-dire une pression du pneumatique supérieure à la pression nominale, d'un véhicule de tourisme ou d'un poids lourd peut conduire en roulage à un échauffement du sommet de celui-ci, c'est-à-dire de la partie centrale de la bande de roulement.

Par ailleurs, il est connu notamment du document EP 1 275 949 d'implanter un capteur sans fil dans les pneumatiques pour déterminer des forces ou contraintes s'exerçant au sein du pneumatique.

Le document EP 0 937 615 décrit quant à lui l'utilisation de capteurs sans fil à onde acoustique de surface intégrés dans un pneumatique notamment pour la mesure de l'adhérence d'un pneumatique. Un tel capteur présente l'avantage de pouvoir être interrogé à distance, par onde radiofréquence, sans-fil, sans qu'une source d'énergie proche soit nécessaire. L'énergie de l'onde radio d'interrogation envoyée par un dispositif d'interrogation à distance est suffisante pour que le capteur envoie une onde radio modifiée en réponse.

Le document US 2002/121132 décrit un système de mesure sans fil incorporé dans un pneumatique pour la mesure de la température et de la pression d'un pneumatique, en accord avec le préambule de la revendication 1.

Il est ainsi notamment connu de mettre en place dans les ensembles montés de véhicules, des systèmes de mesure d'un paramètre physique pour déterminer des variations dudit paramètre physique.

Il est également connu d'utiliser des systèmes de mesure sans fil, par technologie à onde acoustique de surface ou onde acoustique de volume capable de communiquer avec un dispositif d'interrogation attaché au véhicule pour signaler une variation d'un paramètre physique du pneumatique susceptible de conduire à une modification des performances dudit pneumatique.

L'utilisation de ce type de système ne nécessitant pas de source d'énergie impose toutefois une distance limitée entre le système de mesure et le dispositif d'interrogation, notamment pour limiter l'atténuation du signal correspondant à la mesure.

En outre, les conditions d'utilisation de ce type de système sont réglementées et sont notamment limitées en termes de puissance d'onde radio maximum. Ces mêmes niveaux maxima sont encore limités réglementairement en fonction du taux d'utilisation du dispositif d'interrogation. Le principe de mesure sur un ensemble monté impose une fréquence élevée d'utilisation du dispositif d'interrogation lorsque celui-ci tourne à vitesse élevée, notamment parce que le temps de passage du système de mesure devant l'antenne du dispositif d'interrogation est très court et diminue les probabilités d'obtention d'une mesure à chacune des interrogations.

Il ressort de ces considérations que la distance entre le système de mesure associé au pneumatique et le dispositif d'interrogation fixé sur le véhicule et plus précisément l'antenne associée à ce dispositif d'interrogation doit être aussi réduite que possible.

Des essais ont été réalisés par la demanderesse sur des véhicules en incorporant une antenne d'un dispositif dans le passage de roue du véhicule correspondant au pneumatique comportant le système de mesure.

Les essais ont montré qu'il était ainsi possible d'effectuer des mesures cohérentes et reproductibles. Toutefois, il s'est avéré que, dans certaines conditions d'utilisation, notamment liées aux conditions climatiques, ou bien en fonction de la sensibilité du dispositif d'interrogation, les mesures de températures effectuées n'étaient pas totalement exploitables, notamment soit par ce que les signaux captés sont trop faibles soit parce qu'ils sont perturbés par d'autres signaux sur la même bande de fréquence.

L'invention a ainsi pour but de fournir un véhicule comportant au moins un ensemble monté incorporant au moins un système de mesure, sans fil par technologie à onde acoustique de surface ou onde acoustique de volume, d'un paramètre physique d'un ensemble monté d'un véhicule et un dispositif d'interrogation capable d'exploiter les informations mesurées quelles que soient les conditions d'utilisation du véhicule.

Ce but a été atteint selon l'invention par un véhicule comportant au moins un ensemble monté, comprenant une roue et un pneumatique, et un élément constitué pour partie de masses polymériques, ledit ensemble monté comportant au moins un système de mesure d'un paramètre physique du pneumatique sans fil par technologie à onde acoustique de surface ou onde acoustique de volume, au moins une zone dudit élément étant à une distance constante et de préférence inférieure à 10 cm de l'ensemble monté lors de l'utilisation du véhicule, et une antenne d'interrogation étant associée à ladite zone dudit élément.

Les inventeurs ont su mettre en évidence qu'une réalisation selon l'invention, dans laquelle l'antenne d'interrogation est mise en place à une distance de l'ensemble monté qui reste constante et relativement faible lors de l'utilisation du véhicule, permet d'obtenir une transmission du signal correspondant à la mesure quelles que soient les conditions d'utilisation. Les essais ont notamment mis en évidence l'efficacité de la solution proposée en termes de cohérence et de reproductibilité pour des mesures effectuées sur des véhicules roulant à vitesse élevée. Les essais ont également montré que dans le cas de mesures effectuées conformément à l'invention, l'antenne d'interrogation et donc le dispositif d'interrogation sont moins sensibles à la présence de signaux extérieurs dans la même bande de fréquence pour une sensibilité donnée de l'antenne d'interrogation et du dispositif d'interrogation.

Par distance constante entre l'ensemble monté et l'antenne d'interrogation, on entend au sens de l'invention une distance constante entre les trajectoires de ces éléments lorsque le véhicule est en mouvement. Cette distance ne doit pas être comprise comme la distance entre un point défini d'un ensemble monté et l'antenne d'interrogation, ladite distance variant du fait de la rotation de l'ensemble monté. Selon l'invention, l'antenne d'interrogation peut donc être associée à une zone d'un élément qui ne subit pas de mouvement de rotation. Conformément à l'invention, à chaque tour de roue et donc à chaque interrogation, la distance entre l'antenne d'interrogation et le système de mesure incorporé dans l'ensemble monté est la même.

L'invention est particulièrement intéressante dans le cas d'un système de mesure de température incorporé dans un pneumatique, ledit système étant apte à communiquer avec un dispositif d'interrogation attaché au véhicule pour signaler une variation de température locale d'une partie d'une masse polymérique de l'élément du pneumatique susceptible de conduire à une modification pertinente des performances dudit élément et ainsi aider le conducteur ou pilote du véhicule à adapter sa conduite aux conditions et ainsi optimiser les performances du pneumatique.

Les essais ont en effet mis en évidence que les systèmes de mesure de la température sans fil par technologie à onde acoustique de surface ou onde acoustique de volume du type SAW (Surface Acoustic Wave) ou BAW (Bulk Acoustic Wave) autorise une mesure précise de la température locale, c'est-à-dire une mesure de la température du mélange polymérique directement dans leur voisinage.

Les capteurs de type SAW ou BAW présente également l'avantage comme évoqué précédemment de pouvoir être interrogé à distance par onde radio, sans qu'une source d'énergie proche leur soit nécessaire.

Ces capteurs autorisent en outre des mesures fréquentes et à hautes vitesses, et assurent ainsi une information fréquente et rapide sur l'état des mélanges polymériques. Ils sont ainsi particulièrement bien adaptés à la mesure de température de mélanges caoutchouteux qui lorsqu'ils sont soumis à des sollicitations importantes ou de longue durée voient leur température variée.

Un autre avantage de ces capteurs est notamment lié à leurs faibles dimensions qui autorisent leur mise en place dans le pneumatique sans perturber son fonctionnement.

Le système de mesure est ainsi inséré dans une masse caoutchouteuse constitutive du pneumatique ; selon la destination de ce pneumatique ou plus exactement le véhicule auquel il est destiné, l'élément sera noyé dans une masse caoutchouteuse de la bande de roulement, d'un flanc ou bien d'une zone basse.

Selon un premier mode de réalisation de l'invention, le système de mesure est ainsi noyé dans une partie de la bande de roulement du pneumatique de l'ensemble monté du véhicule. Selon le type de véhicule pour lequel est prévu le pneumatique, différentes zones de la bande de roulement peuvent être contrôlées. Par exemple dans le cas d'une motocyclette, il peut notamment être utile de faire une mesure de température au sommet du pneumatique, c'est-à-dire dans le plan équatorial du pneumatique. En effet, cette zone de la bande de roulement peut par exemple être fortement sollicitée dans le cas de vitesses importantes en ligne droite pendant des temps importants. Dans un autre exemple, qui est celui des poids lourds, le système de mesure peut par exemple être noyé dans une partie des extrémités axialement extérieures de la bande de roulement, cette zone étant aussi appelée épaule du pneumatique. Il est effectivement connu de l'homme du métier que les épaules du pneumatique sont soumises à des sollicitations pouvant conduire à un échauffement des masses caoutchouteuses.

Selon un deuxième mode de réalisation de l'invention, le système de mesure est noyé dans une partie d'un flanc du pneumatique de l'ensemble monté du véhicule. La mesure de la température dans une zone du flanc peut notamment apporter une information importante dans le cas des véhicules de type génie civil qui présente de fortes flexions en roulage qui viennent solliciter certaines zones des flancs.

Selon un troisième mode de réalisation de l'invention, le système de mesure est noyé dans une partie d'un bourrelet du pneumatique de l'ensemble monté du véhicule. Une telle application peut notamment être intéressante dans le cas des véhicules de type agricole du fait notamment des fortes flexions subies par ces pneumatiques.

Les mesures de température sont transmises par onde radio à l'antenne d'interrogation puis au dispositif d'interrogation par exemple fixé sur le véhicule pour apporter des indications au conducteur du véhicule. Ces indications mises à disposition du conducteur peuvent, par exemple, lui permettre d'adapter la conduite du véhicule pour limiter l'échauffement constaté et ramener l'élément de la liaison au sol à des températures acceptables pour conserver ses performances.

Selon un mode de réalisation de l'invention, l'antenne d'interrogation est fixée sur ladite zone de l'élément du véhicule constitué pour partie de masses polymériques. La fixation de l'antenne peut être obtenue par tout moyen connu de l'homme du métier ; elle est par exemple réalisée par collage.

Selon un autre mode de réalisation de l'invention, l'antenne d'interrogation est noyée dans ladite zone de l'élément du véhicule constitué pour partie de masses polymériques. Selon ce mode de réalisation de l'invention, l'antenne est avantageusement associée à l'élément lors de la fabrication de celui-ci. L'antenne d'interrogation est ainsi rendue invisible et est protégée d'éventuelles dégradations en cours d'utilisation. Un système de connectique est également prévu pour relier l'antenne d'interrogation à un dispositif d'interrogation proprement dit.

Selon une variante de réalisation préférée de l'invention, l'élément, constitué pour partie de masses polymériques, est solidaire de l'axe de la roue.

Cette variante de réalisation de l'invention permet de garantir que la distance entre l'antenne d'interrogation et le système de mesure incorporé dans l'ensemble monté reste constante quelle que soit l'utilisation du véhicule. Il peut par exemple s'agir d'un garde-boue dans le cas d'une motocyclette ou bien d'un scooter. Cela peut encore être un élément spécifique ajouté à cet effet ; il peut par exemple être associé au système de freinage dans le cas d'une automobile.

En effet, cette variante de réalisation de l'invention assure une distance constante y compris dans des utilisations du véhicule par exemple sur sol chaotique entraînant des déplacements sensiblement verticaux des ensembles montés par rapport au véhicule.

Selon d'autres variantes de réalisation, l'antenne d'interrogation peut être associée à une partie du véhicule qui autorise la constance de la distance entre l'antenne d'interrogation et le système de mesure incorporé dans l'ensemble monté. Cette partie du véhicule est par exemple un dispositif de type « bavette » qui du fait de son positionnement proche du sol peut conserver une distance constante par rapport à un ensemble monté.

Selon un premier mode de réalisation d'un véhicule selon l'invention il est prévu lorsqu'au moins deux systèmes de mesure d'un paramètre physique du pneumatique sans fil par technologie à onde acoustique de surface ou onde acoustique de volume, comportant des antennes polarisées linéairement, sont associés à l'ensemble monté, que les directions de polarisation des antennes des systèmes de mesure forment entre elles un angle compris entre 30 et 90° et que les directions de polarisation des antennes d'interrogation forment entre elles un angle compris entre 30 et 90°.

Les essais réalisés ont pu mettre en évidence que la communication entre des dispositifs d'interrogation, par exemple associé au véhicule, et chacun des systèmes de mesure, dans le cas de capteurs du type SAW ou BAW, peut nécessiter une orientation correspondant à l'une ou l'autre des antennes des systèmes de mesure pour communiquer avec chacun notamment lorsque deux antennes d'interrogations sont utilisés à proximité l'une de l'autre. Une telle réalisation selon l'invention va ainsi permettre de recevoir les signaux réémis par chacun des systèmes de mesure, à l'aide soit de deux dispositifs d'interrogation soit d'un seul dispositif d'interrogation prévu pour recevoir des signaux réémis depuis des antennes dont les directions de polarisation sont différentes, en permettant ainsi de sélectionner le système de mesure. Une telle réalisation permet donc de connaître la température d'une zone définie dans le cas de deux systèmes de mesure placés dans des zones différentes. Il est en effet connu de l'homme du métier que dans le cas des capteurs SAW ou BAW de type résonateur, a contrario des capteurs SAW ou BAW de type ligne à retard, dès lors qu'au moins deux dispositifs de mesure de ce type, utilisant la même bande de fréquence, sont insérés dans un pneumatique, un dispositif d'interrogation associé n'est pas en mesure d'identifier la provenance des signaux qu'il reçoit et donc d'identifier le capteur avec lequel il communique. L'utilisation de plusieurs capteurs SAW ou BAW de type résonateur ne permet pas l'émission par chacun d'eux de signaux autorisant leur identification lorsqu'ils travaillent dans la même bande de fréquence.

Selon un second mode de réalisation d'un véhicule selon l'invention il est prévu lorsqu'au moins deux systèmes de mesure d'un paramètre physique du pneumatique sans fil par technologie à onde acoustique de surface ou onde acoustique de volume, comportant des antennes polarisées linéairement, sont associés à l'ensemble monté, que les directions de polarisation des antennes des systèmes de mesure sont parallèles. Notamment lorsque les deux antennes du ou des dispositifs d'interrogation peuvent être suffisamment distantes l'une de l'autre, les essais ont montré que conformément à la réalisation d'un véhicule selon l'invention et notamment lorsque la distance entre la ou les zones du ou desdits éléments portant lesdites antennes d'interrogation étant à une distance inférieure à 10 cm de l'ensemble monté, chacune des antennes ne perçoit que le signal retourné par l'un des systèmes de mesure prédéfini.

Une réalisation selon l'un ou l'autre de ces modes de réalisation d'un véhicule selon l'invention peut être particulièrement intéressante dans le cas d'un véhicule de type motocyclette équipé de pneumatiques réalisés avec un taux de courbure le plus souvent supérieur à 0,2 pour être utilisé en carrossage. Les sollicitation exercées par exemple dans le plan équatorial de la bande de roulement et dans les parties axialement extérieures de la bande de roulement ne sont donc pas les mêmes puisque provoquées dans des conditions différentes. En effet, selon l'utilisation de la moto, soit en ligne droite, soit en courbe, la partie de la bande de roulement au contact du sol n'est pas la même et n'est pas sollicitée de la même manière. La mise en place de systèmes de mesure de température dans les différentes zones correspondantes, selon cette variante de réalisation de l'invention selon laquelle les directions de polarisation dés antennes forment entre elles un angle compris entre 30 et 90°, autorise une surveillance en continu de ces différentes zones.

De façon à faciliter la mise en place du ou des systèmes de mesure de la température, le pneumatique selon l'invention est avantageusement réalisé selon une technique de fabrication du type sur noyau dur ou forme rigide telle qu'évoquée précédemment.

Un tel pneumatique qui comme énoncé précédemment est avantageusement réalisé selon une technique du type sur noyau dur ou toroïdal autorise notamment la mise en place des systèmes de mesure de la température dans une position quasi-finale, une étape de conformation n'étant pas requise selon ce type de procédé, ladite position finale pouvant en outre être parfaitement identifiée. En effet, la fabrication du type sur noyau dur peut permettre d'insérer un système de mesure de la température selon une indexation prédéterminée.

L'invention propose encore une utilisation d'un système de mesure d'un paramètre physique du pneumatique sans fil par technologie à onde acoustique de surface ou onde acoustique de volume dans un ensemble monté d'un véhicule, ledit système étant associé à une antenne d'interrogation solidaire du véhicule, ladite antenne d'interrogation étant associée à une zone d'un élément du véhicule constitué pour partie de masses polymériques et ladite zone étant à une distance constante et de préférence inférieure à 10 cm de l'ensemble monté lors de l'utilisation du véhicule.

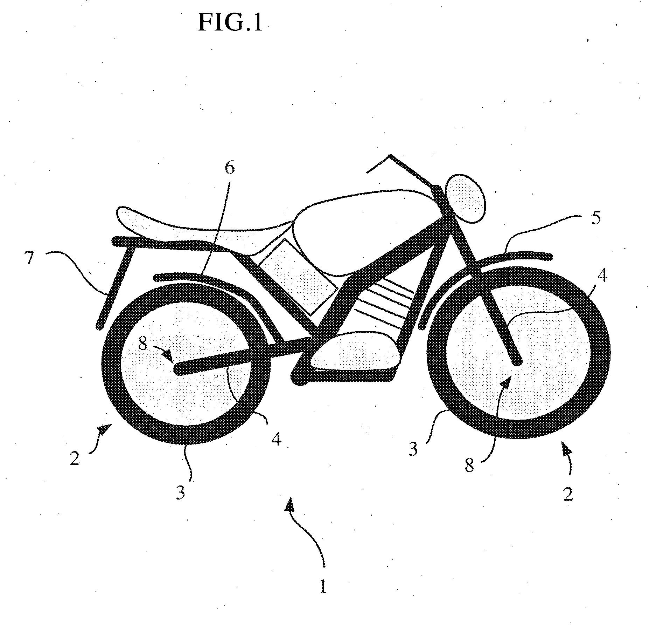

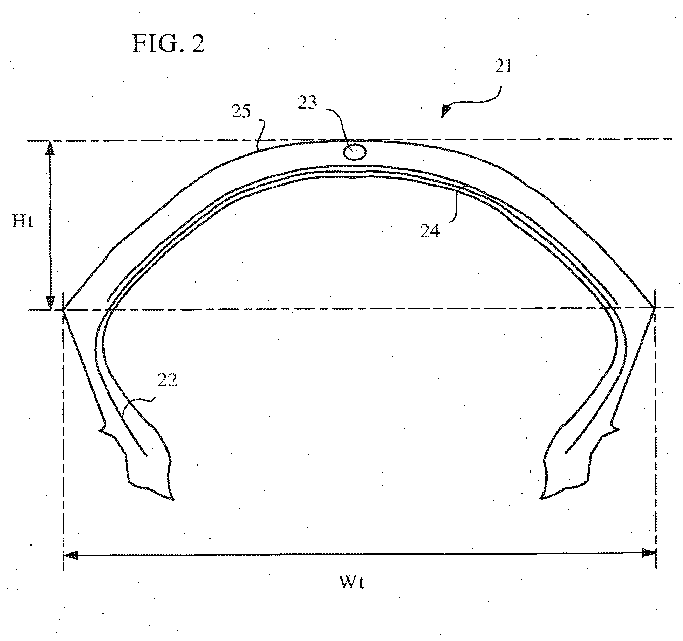

D'autres détails et caractéristiques avantageux de l'invention ressortiront ci-après de la description des exemples de réalisation de l'invention en référence aux figures 1 et 2 qui représentent :
- figure 1, un schéma d'une motocyclette,
- figure 2, une vue méridienne d'un schéma d'un pneumatique selon un premier mode de réalisation de l'invention,
- figure 3, une vue méridienne d'un schéma d'un pneumatique selon un deuxième mode de réalisation de l'invention,
- figure 4, une vue en plan et écorché de la bande de roulement d'un pneumatique.

Les figures 1 à 4 ne sont pas représentées à l'échelle pour en simplifier la compréhension.

La figure 1 représente un schéma d'une partie d'un véhicule 1 de type motocyclette comprenant des ensembles montés 2 comprenant un pneumatique 3, et d'autres éléments 4 de la liaison au sol dudit véhicule 1.

Sur la figure sont également représentés des éléments réalisés en matériaux polymériques dans lesquels peuvent être incorporés des antennes d'interrogation conformément à l'invention. Il s'agit des gardes boue avant 5 et arrière 6 ainsi que d'une protection arrière 7.

Les gardes boue 5, 6 sont des éléments solidaires d'un axe 8 des ensembles montés 2 par exemple par l'intermédiaire des éléments de liaison au sol 4. Conformément à une variante préférée de l'invention, des antennes d'interrogation peuvent être associées à une zone de ces gardes boue 5, 6 qui est à une distance constante d'un point d'un ensemble monté 2, et notamment d'un point d'un pneumatique 3, à chaque tour de roue.

La protection arrière 7 n'est pas solidaire d'un axe 8 des ensembles montés 2 mais du fait de son positionnement par rapport à l'ensemble monté peut conserver une distance constante par rapport audit ensemble monté. En cas de roulage sur un sol chaotique, il apparaît un mouvement relatif sensiblement vertical entre ladite protection arrière 7 et l'ensemble monté 2. Il subsiste toutefois une distance constante entre une zone de ladite protection 7 et l'ensemble monté 2 en se référant à des points différents de l'ensemble monté 2. Une telle réalisation nécessite donc une adaptation de la mesure en fonction de l'utilisation du véhicule. En effet, si la distance peut rester constante entre une zone de l'élément considéré et l'ensemble monté, celle-ci ne sera pas constante précisément sur un tour de roue. La fréquence d'interrogation doit donc être adaptée en fonction de l'utilisation du véhicule et notamment en fonction du déplacement vertical de l'ensemble monté par rapport au véhicule pour effectuer des interrogations avec une distance qui reste constante entre l'antenne d'interrogation et le système de mesure à chaque interrogation. Une telle adaptation peut par exemple être pilotée par un dispositif électronique couplé au dispositif de suspension.

Un dispositif interrogateur, non représenté sur les figures, est avantageusement prévu sur le véhicule pour communiquer avec le capteur. Ledit dispositif interrogateur peut alors analyser le signal et transmettre les informations au pilote ou bien éventuellement agir directement sur le véhicule. Ledit dispositif peut par exemple être prévu pour envoyer un signal d'alerte avant qu'une évolution de la température pouvant conduire à des dommages ne soit atteinte.

Le dispositif interrogateur est relié à au moins une antenne d'interrogation mise en place sur un garde-boue 5, 6 ou sur un élément tel que la protection arrière 7.

La figure 2 représente un pneumatique 21 destiné à être utilisé sur un véhicule de type motocyclette comprenant une armature de carcasse constituée d'une couche 22 comprenant des éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°. Le pneumatique 21 comporte encore une armature de sommet 24.

Le pneumatique 21 présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Conformément à l'invention, le pneumatique comporte un système 23 de mesure de la température interne de la masse caoutchouteuse de la bande de roulement 25. Ce système de mesure 23 est un capteur de température sans fil, de type résonateur SAW (Surface Acoustic Wave). Ce type de capteur présente l'avantage, comme expliqué précédemment, de ne pas nécessiter d'alimentation associée ; il renseigne sur la température de la masse caoutchouteuse qui l'entoure en modifiant une onde qu'il reçoit et retransmet.

Dans le cas de la figure 1, le capteur est placé dans le plan équatorial du pneumatique et va permettre de renseigner sur la température locale de la masse caoutchouteuse. La mise en place du capteur dans cette zone permet au conducteur ou pilote de la moto de surveiller ou d'être informé sur la température d'une zone sollicitée notamment lors de roulage à grande vitesse en ligne droite.

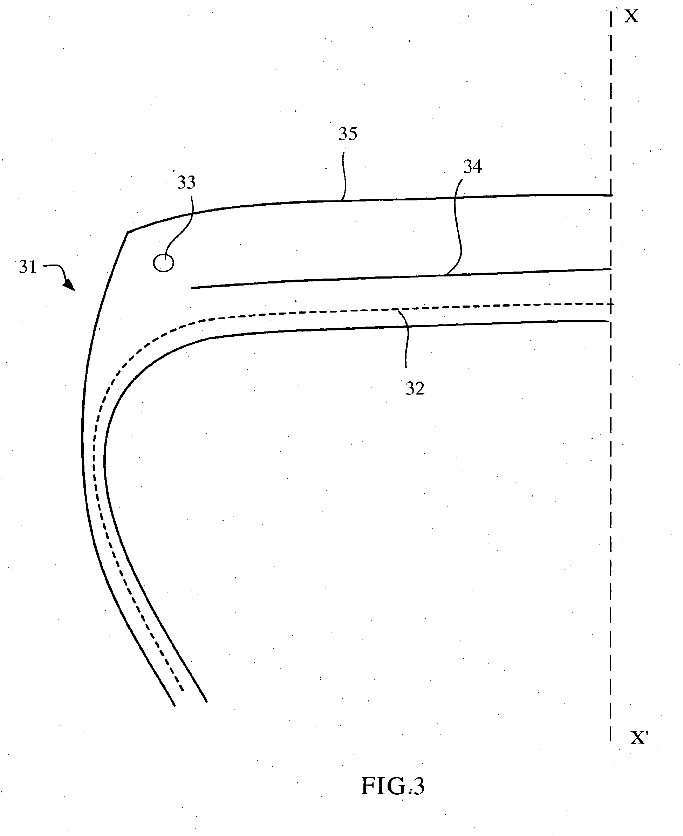

La figure 3 illustre une autre réalisation de l'invention plus particulièrement adaptée au cas d'un véhicule de type poids lourd. La figure 3 ne représente qu'une vue partielle d'un demi pneumatique 31 qui se prolonge de manière symétrique par rapport à l'axe XX' qui représente le plan médian circonférentiel, ou plan équatorial, d'un pneumatique. Les zones basses et bourrelets du pneumatique 31 ne sont notamment pas représentés sur cette figure.

Sur cette figure 3, il a été choisi de noyer le capteur de type résonateur SAW 33 dans une zone de la masse caoutchouteuse de la bande de roulement 35 située au niveau axialement extérieure de la dite bande de roulement, usuellement appelée épaule du pneumatique. Il est en effet connu de l'homme du métier que ce type de pneumatique, notamment soumis à des charges importantes est amené à subir des contraintes qui dans des conditions extrêmes peuvent conduire à une élévation de température de cette zone de la bande de roulement.

Les figures 2 et 3 ne représentent qu'un seul système de mesure de la température au sein d'un pneumatique. Selon d'autres variantes de réalisation de l'invention, il peut être prévu une répartition d'au moins deux systèmes de mesure de la température au sein de deux zones de masses caoutchouteuses constitutives du pneumatique.

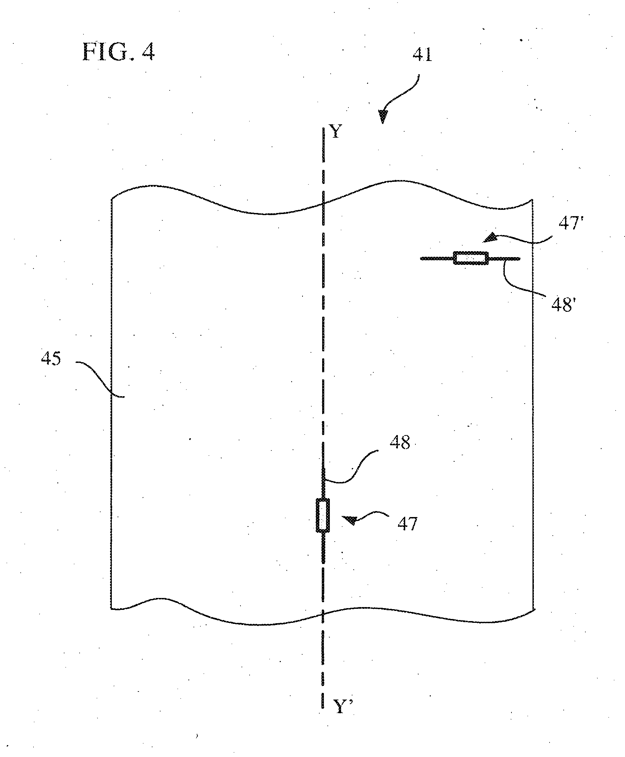

La figure 4 représente ainsi une vue en plan et en écorché de la bande de roulement 45 d'un pneumatique 41 de type motocyclette dans lequel au moins deux systèmes de mesure 47, 47' sont noyés dans des masses caoutchouteuses d'un pneumatique. Cette figure 4 peut par exemple être une représentation d'un pneumatique pour motocyclette.

Un premier système de mesure 47 de mesure de la température, de type résonateur SAW, est mis en place dans la zone du plan équatorial YY' du pneumatique 41 et permet comme expliquer dans le cas de la figure 2 de donner des informations quant à la température interne de la partie de la bande de roulement 45 au contact du sol lorsque la moto suit une trajectoire rectiligne.

Un deuxième système de mesure 47' de mesure de la température, de type résonateur SAW, est mis en place dans une partie axialement extérieure de la bande de roulement 45 du pneumatique 41 et permet de donner des informations quant à la température interne de ladite partie axialement extérieure de la bande de roulement 45 qui se trouve au contact du sol lorsque la moto suit une trajectoire en courbe, le pneumatique 41 étant alors utilisé en carrossage.

Les informations relatives à la température mesurées au sein de la bande de roulement par chacun des capteurs de type résonateur SAW sont transmises à un système d'interrogation solidaire du véhicule. Comme il l'a déjà été dit précédemment les signaux émis par les systèmes de mesure de type résonateur SAW ou BAW ne permettent pas de sélectionner le système de mesure. Selon la représentation faite sur la figure 4, les directions de polarisation des antennes 48 et 48' associées à chacun des systèmes de mesure 47, 47' forment entres elles un angle sensiblement égal à 90°. Ces orientations différentes des antennes nécessitent de prévoir une répartition analogue des antennes d'interrogation sur le véhicule pour permettre une communication avec chacun des capteurs résonateur SAW 48, 48' implantés dans le pneumatique. En effet, la réception des signaux de chacun des systèmes de mesure ne peut être assurée que par un couplage électromagnétique satisfaisant pour chacun de ces signaux réémis par chaque système de mesure avec une antenne d'interrogation adaptée.

## Revendications

1. Véhicule (1) comportant au moins un ensemble monté (2), comprenant une roue et un pneumatique (3), et un élément (5, 6, 7) constitué pour partie de masses polymériques et solidaire de l'axe (8) de la roue, ledit ensemble monté comportant au moins un système de mesure d'un paramètre physique du pneumatique sans fil par technologie à onde acoustique de surface ou onde acoustique de volume, au moins une zone dudit élément étant à une distance constante de l'ensemble monté (2) lors de l'utilisation du véhicule, **caractérisé en ce qu'**une antenne d'interrogation est associée à ladite zone dudit élément et **en ce que** l'antenne d'interrogation est fixée sur ladite zone ou noyée dans ladite zone.

2. Véhicule (1) selon la revendication 1, **caractérisé en ce que** la zone dudit élément (5, 6, 7) est à une distance inférieure à 10 cm de l'ensemble monté (2) lors de l'utilisation du véhicule.

3. Véhicule (1) selon l'une des revendications 1 ou 2, au moins deux systèmes (47, 47') de mesure d'un paramètre physique du pneumatique sans fil par technologie à onde acoustique de surface ou onde acoustique de volume, comportant des antennes (48, 48') polarisées linéairement, étant associés à l'ensemble monté (2), **caractérisé en ce que** les directions de polarisation des antennes (48, 48') des systèmes de mesure forment entre elles un angle compris entre 30 et 90°et **en ce que** les directions de polarisation des antennes d'interrogation forment entre elles un angle compris entre 30 et 90°.

4. Véhicule (1) selon l'une des revendications 1 à 3, au moins deux systèmes de mesure d'un paramètre physique du pneumatique sans fil par technologie à onde acoustique de surface ou onde acoustique de volume, comportant des antennes polarisées linéairement, étant associés à l'ensemble monté, **caractérisé en ce que** les directions de polarisation des antennes des systèmes de mesure sont parallèles entre elles.

5. Véhicule (1) selon l'une des revendications 1 à 4, **caractérisé en ce qu'**au moins un système de mesure (23, 33, 47) d'un paramètre physique du pneumatique sans fil par technologie à onde acoustique de surface ou onde acoustique de volume est incorporé dans un pneumatique (21, 31, 41).

6. Véhicule (1) selon la revendication 5, **caractérisé en ce qu'**au moins système (23, 33, 47) de mesure est noyé dans une partie de la bande de roulement (25, 35, 45) du pneumatique (21, 31, 41).

7. Véhicule (1) selon la revendication 5 ou 6, **caractérisé en ce qu'**au moins un système de mesure est noyé dans une partie d'un flanc du pneumatique.

8. Véhicule (1) selon l'une des revendications 5 à 7, **caractérisé en ce qu'**au moins un système de mesure est noyé dans une partie d'un bourrelet du pneumatique.

9. Utilisation d'un système (23, 33, 47) de mesure sans fil d'un paramètre physique du pneumatique, par technologie à onde acoustique de surface ou onde acoustique de volume dans un ensemble monté (2) d'un véhicule (1), ledit système étant associé à une antenne d'interrogation solidaire du véhicule, **caractérisé en ce que** ladite antenne d'interrogation est associée à une zone d'un élément (5, 6, 7) du véhicule constitué pour partie de masses polymériques et **en ce que** ladite zone est à une distance constante de l'ensemble monté (2) lors de l'utilisation du véhicule.

10. Utilisation d'un système de mesure (23, 33, 47) selon la revendication 9, **caractérisé en ce que** la zone dudit élément est à une distance inférieure à 10 cm de l'ensemble monté (2) lors de l'utilisation du véhicule (1).

11. Utilisation d'un système (23, 33, 47) de mesure selon la revendication 9 ou 10, l'ensemble monté comprenant une roue et un pneumatique, **caractérisé en ce que** le système de mesure est incorporé dans le pneumatique (21, 31, 41).

## Patentansprüche

1. Fahrzeug (1), das mindestens eine montierte Einheit (2), die ein Rad und einen Luftreifen (3) enthält, und ein Element (5, 6, 7) aufweist, das zum Teil aus Polymermassen besteht und fest mit der Achse (8) des Rads verbunden ist, wobei die montierte Einheit mindestens ein drahtloses System zur Messung eines physikalischen Parameters des Luftreifens durch akustische Oberflächenwellen- oder akustische Volumenwellentechnologie aufweist, wobei mindestens eine Zone des Elements sich während der Nutzung des Fahrzeugs in einem konstanten Abstand zur montierten Einheit (2) befindet, **dadurch gekennzeichnet, dass** eine Abfrageantenne der Zone des Elements zugeordnet ist, und dass die Abfrageantenne an der Zone befestigt oder in die Zone eingebettet ist.

2. Fahrzeug (1) nach Anspruch 1, **dadurch gekennzeichnet, dass** die Zone des Elements (5, 6, 7) sich bei der Nutzung des Fahrzeugs in einem Abstand von weniger als 10 cm zur montierten Einheit (2) befindet.

3. Fahrzeug (1) nach einem der Ansprüche 1 oder 2, wobei mindestens zwei drahtlose Systeme (47, 47') zur Messung eines physikalischen Parameters des Luftreifens durch akustische Oberflächenwellen- oder akustische Volumenwellentechnologie, die linear polarisierte Antennen (48, 48') aufweisen, der montierten Einheit (2) zugeordnet sind, **dadurch gekennzeichnet, dass** die Polarisationsrichtungen der Antennen (48, 48') der Messsysteme miteinander einen Winkel zwischen 30 und 90° bilden, und dass die Polarisationsrichtungen der Abfrageantennen miteinander einen Winkel zwischen 30 und 90° bilden.

4. Fahrzeug (1) nach einem der Ansprüche 1 bis 3, wobei mindestens zwei drahtlose Systeme zur Messung eines physikalischen Parameters des Luftreifens durch akustische Oberflächenwellen- oder akustische Volumenwellentechnologie, die linear polarisierte Antennen aufweisen, der montierten Einheit zugeordnet sind, **dadurch gekennzeichnet, dass** die Polarisationsrichtungen der Antennen der Messsysteme zueinander parallel sind.

5. Fahrzeug (1) nach einem der Ansprüche 1 bis 4, **dadurch gekennzeichnet, dass** mindestens ein drahtloses System (23, 33, 47) zur Messung eines physikalischen Parameters des Luftreifens durch akustische Oberflächenwellen- oder akustische Volumenwellentechnologie in einen Luftreifen (21, 31, 41) eingebaut ist.

6. Fahrzeug (1) nach Anspruch 5, **dadurch gekennzeichnet, dass** mindestens ein Messsystem (23, 33, 47) in einen Teil des Laufstreifens (25, 35, 45) des Luftreifens (21, 31, 41) eingebettet ist.

7. Fahrzeug (1) nach Anspruch 5 oder 6, **dadurch gekennzeichnet, dass** mindestens ein Messsystem in einen Teil einer Flanke des Luftreifens eingebettet ist.

8. Fahrzeug (1) nach einem der Ansprüche 5 bis 7, **dadurch gekennzeichnet, dass** mindestens ein Messsystem in einen Teil eines Wulsts des Luftreifens eingebettet ist.

9. Verwendung eines drahtlosen Systems (23, 33, 47) zur Messung eines physikalischen Parameters des Luftreifens durch akustische Oberflächenwellen- oder akustische Volumenwellentechnologie in einer montierten Einheit (2) eines Fahrzeugs (1), wobei das System einer fest mit dem Fahrzeug verbundenen Abfrageantenne zugeordnet ist, **dadurch gekennzeichnet, dass** die Abfrageantenne einer Zone eines Elements (5, 6, 7) des Fahrzeugs zugeordnet ist, die zum Teil aus Polymermassen besteht, und dass die Zone des Elements sich bei der Nutzung des Fahrzeugs in einem konstanten Abstand zur montierten Einheit (2) befindet.

10. Verwendung eines Messsystems (23, 33, 47) nach Anspruch 9, **dadurch gekennzeichnet, dass** die Zone des Element sich bei der Nutzung des Fahrzeugs (1) in einem Abstand von weniger als 10 cm zur montierten Einheit (2) befindet.

11. Verwendung eines Messsystems (23, 33, 47) nach Anspruch 9 oder 10, wobei die montierte Einheit ein Rad und einen Luftreifen enthält, **dadurch gekennzeichnet, dass** das Messsystem in den Luftreifen (21, 31, 41) eingebaut ist.

## Claims

1. Vehicle (1) comprising at least one mounted assembly (2), comprising a wheel and a tire (3), and an element (5, 6, 7) consisting partially of polymer compounds and fixed to the axis of the wheel (8), said mounted assembly comprising at least one wireless system for measuring a physical parameter of the tire by surface acoustic wave technology or volume acoustic wave technology, at least one area of said element being at a constant distance from the mounted assembly (2) during use of the vehicle, **characterized in that** an interrogation antenna is associated with said area of said element and **in that** the interrogation antenna is fixed to said area or buried in said area.

2. Vehicle (1) according to Claim 1, **characterized in that** the area of said element (5, 6, 7) is at a distance of less than 10 cm from the mounted assembly (2) during use of the vehicle.

3. Vehicle (1) according to one of Claims 1 or 2, at least two wireless systems (47, 47') for measuring a physical parameter of the tire by surface acoustic wave technology or volume acoustic wave technology, comprising linearly polarized antennae (48, 48'), being associated with the mounted assembly (2), **characterized in that** the polarization directions of the antennae of the measuring systems form therebetween an angle of between 30 and 90° and **in that** the polarization directions of the interrogation antennae form therebetween an angle of between 30 and 90°.

4. Vehicle (1) according to one of Claims 1 to 3, at least two wireless systems for measuring a physical parameter of the tire by surface acoustic wave technology or volume acoustic wave technology, comprising linearly polarized antenna, being associated with the mounted assembly, **characterized in that** the polarization directions of the antennae of the measuring systems are parallel with one another.

5. Vehicle (1) according to one of Claims 1 to 7, **characterized in that** at least one wireless system (23, 33, 47) for measuring a physical parameter of the tire by surface acoustic wave technology or volume acoustic wave technology is incorporated in a tire (21, 31,41).

6. Vehicle (1) according to Claim 5, **characterized in that** at least one measuring system (23, 33, 47) is buried in a part of the tread (25, 35, 45) of the tire (21, 31, 41).

7. Vehicle (1) according to Claim 5 or 6, **characterized in that** at least one measuring system is buried in a part of the sidewall of the tire.

8. Vehicle (1) according to one of Claims 5 to 7, **characterized in that** at least one measuring system is buried in a part of a bead of the tire.

9. Use of a wireless system (23, 33, 47) for measuring a physical parameter of the tire, by surface acoustic wave technology or volume acoustic wave technology in a mounted assembly (2) of a vehicle (1), said system being associated with an interrogation antenna fixed to the vehicle, **characterized in that** said interrogation antenna is associated with an area of an element (5, 6, 7) of the vehicle partially consisting of polymer compounds and **in that** said area is at a constant distance from the mounted assembly (2) during use of the vehicle.

10. Use of a measuring system (23, 33, 47) according to Claim 9, **characterized in that** the area of said element is at a distance of less than 10 cm from the mounted assembly (2) during use of the vehicle (1).

11. Use of a measuring system (23, 33, 47) according to Claim 9 or 10, the mounted assembly comprising a wheel and a tire, **characterized in that** the measuring system is incorporated in the tire (21, 31, 41).
